# FASCICULE DE BREVET EUROPEEN

(11) **EP 3 323 300 B1**
(45) Date de publication et mention de la délivrance du brevet: **26.06.2019**
(21) Numéro de dépôt: 17202008.3
(22) Date de dépôt: 16.11.2017
(51) Int. Cl.: A23N 12/00, A23N 12/02, A01D 33/08

(54) **UNITE DE TRAITEMENT DE PRODUITS AGRICOLES**
BEHANDLUNGSEINHEIT FÜR LANDWIRTSCHAFTLICHE PRODUKTE
UNIT FOR TREATING AGRICULTURAL PRODUCTS

(30) Priorité: 16.11.2016 FR 1661082
(43) Date de publication de la demande: 23.05.2018
(73) Titulaire: ETS Dubrulle, 59670 Sainte Marie Cappel (FR)
(72) Inventeur: DUBRULLE, Damien, 59670 CASSEL (FR)
(74) Mandataire: Cabinet Beau de Loménie

(56) Documents cités:
- EP-A1- 0 501 590
- DE-A1- 3 533 215
- FR-A1- 2 362 569
- GB-A- 2 509 809
- GB-A- 191 329 737

## Description

### Arrière-plan de l'invention

La présente invention a pour objet une unité de traitement de produits agricoles. Elle trouve en particulier une application dans le domaine de l'agriculture, pour les cultures de pommes de terre, oignons ou autres légumineuses.

Les produits ainsi extraits du champ sont généralement couverts de terre, de sorte qu'il est nécessaire de les nettoyer.

Il est connu d'utiliser une unité de nettoyage, installée à demeure par exemple sur l'exploitation agricole, pour nettoyer les produits récoltés.

Cependant, les champs sur lesquels ces produits sont cultivés pouvant se trouver à une distance significative de l'exploitation agricole, il est souhaitable, de manière à réduire les coûts inhérents au transport desdits produits depuis les champs vers l'exploitation agricole, de nettoyer les produits directement sur le site de leur récolte. Par ailleurs, les volumes de terre issus des opérations de nettoyage étant généralement significatifs, si les opérations sont réalisées sur l'exploitation agricole, la terre ainsi récupérée doit ensuite être évacuée de l'exploitation agricole, ce qui implique encore des coûts supplémentaires.

Un tel nettoyage des produits agricoles directement sur le champ dont ils sont extraits est également particulièrement souhaitable dans la mesure où la terre peut être porteuse de maladies, telles que les nématodes, qui risquent, lorsque la terre est transportée à l'exploitation agricole avec les produits agricoles, de contaminer l'intégralité de l'exploitation agricole.

Il est également connu d'utiliser une unité de nettoyage mobile, qui évolue de manière simultanée à la machine de récolte qui extrait les produits hors du champ. Cependant, de telles unités de nettoyage mobiles, en ce qu'elles ne permettent la réception de produits agricoles que lorsqu'ils sont déversés par une machine de récolte, ne sont pas totalement satisfaisantes : de telles machines ne sont en effet pas adaptées à la configuration de tous types de champs. En outre, de telles unités ne peuvent pas non plus recevoir de produits déversés depuis une remorque. Une unité de nettoyage mobile est également connue de DE-3533215-A1 et de FR-2362569-A1.

### Objet et résumé de l'invention

La présente invention a pour but de résoudre, parmi d'autres, les insuffisances décrites plus haut des unités de nettoyage connues de l'art antérieur en proposant un système permettant de nettoyer efficacement les produits agricoles directement sur leur site de récolte, et permettant de réceptionner des produits provenant de différentes machines agricoles et remorques.

Ce but est atteint par le fait que l'invention porte sur une unité de traitement de produits agricoles ayant une direction longitudinale et comprenant un réceptacle ayant un volume de stockage et comportant des première et seconde extrémités longitudinales, une ouverture de chargement étant formée à la première extrémité longitudinale qui débouche dans le volume de stockage, le réceptacle comportant en outre un convoyeur configuré pour déplacer lesdits produits de la première à la seconde extrémité longitudinale ; l'unité de traitement comporte également une unité de nettoyage disposée à la seconde extrémité longitudinale du réceptacle et configurée pour nettoyer les produits, et un châssis supportant le réceptacle et l'unité de nettoyage et comportant un essieu et des moyens de déplacement configurés pour que le réceptacle prenne alternativement une première position et une seconde position dans laquelle le réceptacle est déplacé par rapport au châssis de manière que la première extrémité longitudinale est abaissée par rapport à la première position, en sorte de permettre le chargement de produits dans le volume de stockage par l'ouverture de chargement.

Par cette disposition, l'unité de traitement peut recevoir, lorsque le réceptacle se trouve dans la première position, des produits déversés par une machine de récolte, par exemple au-dessus des parois latérales du réceptacle ; elle peut également recevoir, lorsque le réceptacle se trouve dans la deuxième position dans laquelle la première extrémité longitudinale est abaissée par rapport à la première position, des produits provenant, par exemple et de manière non limitative, de remorques traditionnelles. On comprend que le passage de la première à la seconde position permet le transfert de produits depuis des remorques traditionnelles par l'ouverture de chargement, les remorques étant disposées de manière que leur ouverture de déchargement soit agencée à proximité de l'ouverture de chargement du réceptacle.

Par cette disposition, et du fait de la présence de l'unité de nettoyage, les produits agricoles peuvent être directement nettoyés sur leur site de récolte, et ce quel que soit le type de machine agricole dont ils proviennent. On comprend en effet que les produits agricoles, qu'ils soient introduits dans le réceptacle par l'ouverture de chargement, au niveau de la première extrémité longitudinale, ou en toute position entre les première et deuxième extrémités longitudinales, au-dessus des parois latérales du réceptacle, sont déplacés, par le convoyeur, vers la deuxième extrémité longitudinale et, par suite, vers l'unité de nettoyage.

En outre, la présence de l'essieu sur le châssis permet de déplacer facilement l'unité de traitement pour l'utiliser même à une distance significative de l'exploitation agricole ou en différents emplacements d'un site comprenant plusieurs espaces de récoltes.

L'invention est déclinée ci-après dans une série de variantes de réalisation, qui peuvent être considérées seules ou en combinaison avec une ou plusieurs des précédentes.

Dans certains modes de réalisation, les moyens de déplacement sont configurés de manière que, dans la seconde position, la première extrémité longitudinale est éloignée de l'essieu du châssis par rapport à la première position.

Par cette disposition, le transfert des produits agricoles depuis d'autres machines agricoles, et en particulier à partir de remorques traditionnelles, est encore facilité. En outre, le déplacement de l'extrémité longitudinale par rapport à l'essieu permet de modifier la disposition du centre de gravité de l'unité de traitement, de manière à ne pas compromettre sa stabilité et la sécurité des personnes évoluant à sa proximité. Par ailleurs, en modifiant la position relative de la première extrémité longitudinale et de l'essieu, le report de charge sur le tracteur, lorsque l'unité de traitement est montée à un système de déplacement, tel qu'un tracteur, est également modifié, ce qui permet d'améliorer la capacité de traction du système de déplacement.

On comprend bien évidemment que, de manière indifférente, les moyens de déplacement sont configurés pour que la première extrémité longitudinale soit fixe selon la direction longitudinale de l'unité de traitement, l'essieu étant alors déplacé lorsque le réceptacle passe de l'une à l'autre des première et deuxième positions, ou pour que l'essieu soit fixe selon la direction longitudinale, la première extrémité longitudinale étant alors déplacée longitudinalement lorsque le réceptacle passe de l'une à l'autre des première et deuxième positions.

Dans certains modes de réalisation, le réceptacle comprend un fond et le châssis comporte un timon, les moyens de déplacement étant agencés entre le fond du réceptacle et le timon, pour déplacer l'unité de traitement.

Par cette disposition, les moyens de déplacement ne limitent pas les dimensions du volume de stockage du réceptacle. En outre, ils facilitent le passage du réceptacle de l'une à l'autre des première et seconde positions. Par ailleurs, les moyens de déplacement ne compromettent pas non plus la coopération de l'unité de traitement avec un tracteur, par l'intermédiaire du timon.

Dans certains modes de réalisation, les moyens de déplacement sont configurés de manière que le réceptacle coulisse par rapport à l'essieu lorsqu'il passe de l'une à l'autre des première et deuxième positions.

Ainsi, le passage de l'une à l'autre des première et deuxième positions est aisé et rapide et la fabrication de l'unité de traitement est simplifiée.

Dans certains modes de réalisation, les moyens de déplacement sont configurés de manière que, dans la deuxième position, l'unité de nettoyage est élevée par rapport à la première position.

Par cet agencement, la position du centre de gravité de l'unité de traitement est modifiée entre les première et deuxième positions, de manière à ne pas compromettre la stabilité de l'unité de traitement, et par suite la sécurité des personnes évoluant à sa proximité.

Dans certains modes de réalisation, l'unité de nettoyage est configurée pour déplacer les produits selon une seconde direction transversale par rapport à la direction longitudinale.

L'espace nécessaire à l'unité de traitement lors de son fonctionnement peut ainsi être réduit ; plus particulièrement, l'espace selon la direction longitudinale de l'unité de traitement peut être limité à la longueur de l'unité de traitement, les produits issus de l'unité de nettoyage étant ensuite évacués de l'unité de traitement selon une direction transversale à ladite direction longitudinale.

De préférence, la seconde direction est sensiblement perpendiculaire à la direction longitudinale de l'unité de traitement.

Dans certains modes de réalisation, l'unité de nettoyage comporte un convoyeur de transfert disposé à la seconde extrémité longitudinale du réceptacle et des moyens de nettoyage, le convoyeur de transfert étant configuré pour déplacer les produits du réceptacle vers les moyens de nettoyage.

Par cette disposition, l'évolution des produits dans l'unité de traitement est facilitée, et l'efficacité et la rapidité du traitement des produits qui y sont disposés sont également améliorées.

Dans certains modes de réalisation, l'unité de traitement comporte en outre un dispositif de déchargement configuré pour décharger les produits hors de l'unité de traitement, les moyens de nettoyage étant configurés pour nettoyer les produits et les déplacer du convoyeur de transfert vers le dispositif de déchargement.

Ainsi, les produits, une fois passés au travers de l'unité de traitement selon la présente invention, peuvent directement être déchargés, par exemple dans des remorques, pour pouvoir être transportés, par exemple vers l'exploitation agricole.

Dans certains modes de réalisation, l'unité de traitement comporte en outre un dispositif de contournement configuré pour contourner les moyens de nettoyage, de manière à déplacer les produits directement du réceptacle vers le dispositif de déchargement.

Ainsi, lorsque les produits disposés dans le réceptacle, par exemple parce qu'ils ont déjà été nettoyés préalablement ou parce qu'ils comportent un faible volume de terre, ne nécessitent pas d'être nettoyés, le dispositif de contournement permet de les faire passer directement de la deuxième extrémité longitudinale du réceptacle vers le dispositif de déchargement. Cette disposition optionnelle permet d'améliorer l'efficacité du traitement des produits disposés dans l'unité de traitement.

Dans certains modes de réalisation, l'unité de traitement comporte en outre des moyens d'actionnement configurés pour actionner le convoyeur de transfert alternativement selon un premier sens, de manière à déplacer les produits du réceptacle vers les moyens de nettoyage, et selon un second sens, opposé au premier sens, de manière à déplacer les produits directement du réceptacle vers le dispositif de déchargement.

Ainsi, l'unité de traitement passe de manière facile et rapide d'un mode de fonctionnement dans lequel les produits évoluent au travers de l'unité de nettoyage, à un mode de fonctionnement dans lequel les produits contournent les moyens de nettoyage et passent de la deuxième extrémité longitudinale du réceptacle au dispositif de déchargement.

L'unité de traitement selon la présente invention est ainsi configurée pour être adaptée facilement et rapidement à différents besoins de l'utilisateur.

Dans certains modes de réalisation, l'unité de traitement comporte en outre des moyens de rangement configurés pour que le dispositif de déchargement prenne alternativement une position d'usage dans laquelle il s'étend à partir des moyens de nettoyage, par exemple selon une direction transversale à la direction longitudinale, et une position de rangement dans laquelle il est rabattu contre l'unité de nettoyage.

Par cette disposition, l'encombrement de l'unité de traitement peut être réduit, ce qui est particulièrement avantageux lorsqu'elle n'est pas en fonctionnement ou lorsqu'elle est déplacée, par exemple entre l'exploitation agricole et le site de récolte.

### Brève description des dessins

D'autres caractéristiques et avantages de l'invention apparaîtront plus clairement et de manière complète à la lecture de la description ci-après d'un mode de réalisation préféré, donné à titre d'exemple non limitatif et en référence aux dessins annexés suivants sur lesquels :
- les figures **1** et **2** représentent schématiquement des vues respectivement en perspective et de dessus d'un exemple d'unité de traitement selon la présente invention ;
- les figures **3** et **4** représentent schématiquement des vues de côté d'une unité de traitement, lorsque son réceptacle est respectivement dans la première position et dans la seconde position ;
- la figure **5** représente schématiquement une vue avant de l'unité de traitement, le dispositif de déchargement étant dans la position d'usage ; et
- la figure **6** représente de manière simplifiée l'unité de nettoyage et le dispositif de déchargement d'un exemple d'unité de traitement selon la présente invention.

### Description détaillée de l'invention

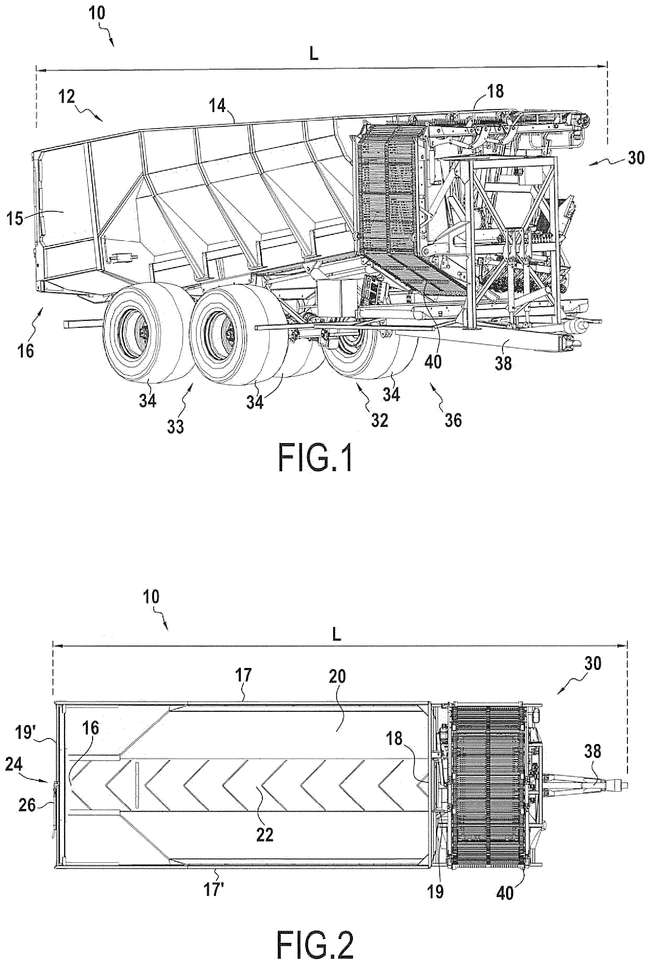

Dans l'exemple représenté aux figures **1 à 6**, l'unité de traitement de produits agricoles **10** selon la présente invention a une direction longitudinale **L** ; elle comporte un réceptacle **12** ayant un volume de stockage **14**, le réceptacle **12** ayant des première **16** et seconde **18** extrémités longitudinales.

Tel que représenté en particulier sur la figure **2**, le réceptacle comporte un fond **20** sur la face intérieure duquel s'étend un convoyeur **22** configuré pour déplacer des éléments, tels que par exemple des produis agricoles, de la première extrémité longitudinale **16** à la seconde extrémité longitudinale **18**.

Le réceptacle **12** comporte également une ouverture de chargement **24** formée à la première extrémité longitudinale **16** qui débouche dans le volume de stockage **14**.

Le réceptacle **12** comporte ainsi des parois latérales **15** qui définissent un volume sensiblement parallélépipédique, les parois latérales comportant deux parois latérales **17**, **17**' disposées de manière sensiblement parallèle l'une à l'autre, une paroi arrière **19**' et une paroi avant **19** ; l'ouverture de chargement **24** est ainsi formée dans la paroi arrière **19**'.

Le réceptacle **12** comporte également des moyens de fermeture **26**, comportant par exemple une porte montée pivotante selon un axe sensiblement vertical sur la paroi arrière **19**, les moyens de fermeture **26** pouvant prendre alternativement une position fermée, représentée sur les différentes figures, dans laquelle ils obstruent l'ouverture de chargement **24**, et une position ouverte, dans laquelle ils dégagent l'ouverture de chargement **24**, de manière à permettre l'introduction de produits dans le volume de stockage **14**.

L'unité de traitement **10** comporte également une unité de nettoyage **30** disposée à la seconde extrémité longitudinale **18** du réceptacle **12** et qui est configurée, tel que cela sera détaillé par la suite, pour nettoyer les produits déplacés par le convoyeur **22**.

L'unité de traitement **10** comporte par ailleurs un châssis **32** qui supporte le réceptacle **12** et l'unité de nettoyage **30**, qui s'étend sensiblement selon la direction longitudinale **L** ; le châssis **32** comporte un essieu **33** sur lequel sont montées, par exemple et de manière non limitative, des roues **34** qui sont configurées pour permettre de déplacer l'unité de traitement **10**.

Le châssis **32** comporte également des moyens de déplacement **36** dont l'utilité apparaîtra plus clairement dans la suite de la description.

En outre, le châssis **32** comporte un timon **38** qui s'étend, par exemple et de manière non limitative, sous l'unité de nettoyage **30**, et qui est configuré pour permettre de monter l'unité de traitement **10** à un système de déplacement, tel qu'un tracteur.

L'unité de traitement **10** comporte en outre un dispositif de déchargement **40** monté sur l'unité de nettoyage **30**, et qui est configuré pour décharger les produits hors de l'unité de traitement **10** en sortie de l'unité de nettoyage **30**.

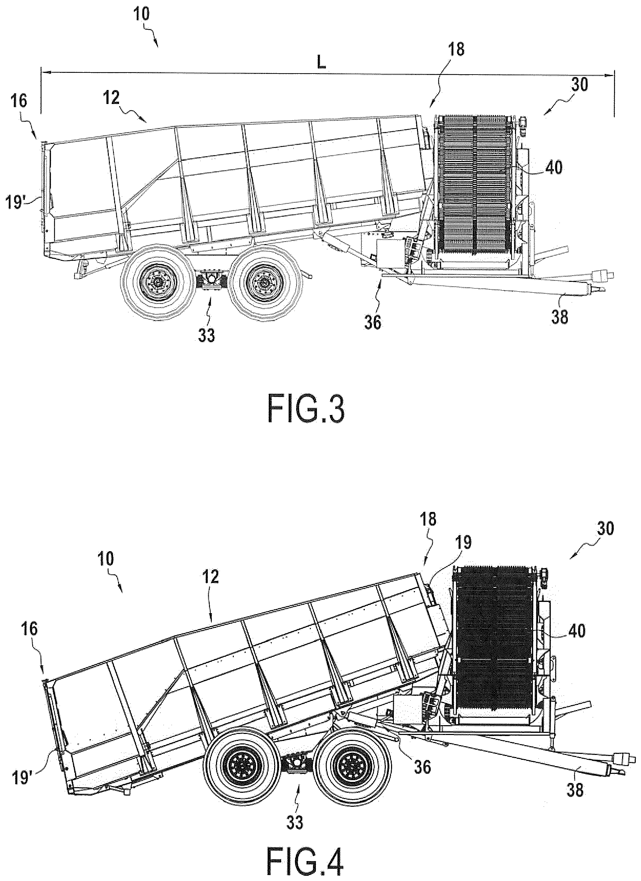

Les moyens de déplacement **36** du châssis **32** sont configurés de manière que le réceptacle **12** prend alternativement une première position, représentée en particulier par les figures **1** et **3**, et une deuxième position, représentée en particulier par la figure **4**, dans laquelle le réceptacle **12** est déplacé par rapport au châssis **32** de manière que la première extrémité longitudinale **16** est abaissée par rapport à la première position, en sorte de permettre le chargement de produits dans le volume de stockage **14** par l'ouverture de chargement **24**.

On comprend donc que la première position est, par exemple et de manière non limitative, une position dans laquelle l'unité de traitement **10** peut être déplacée sur le site de récolte, à proximité de la machine de récolte qui extrait les produits hors du sol, les produits étant alors introduits dans le volume de stockage **14** en étant déversés au-dessus des parois latérales **15** du réceptacle **12**. La deuxième position est, par exemple et de manière non limitative, une position de chargement, dans laquelle l'unité de traitement **10** n'est pas déplacée, les moyens de fermeture **26** étant dans la position ouverte, de manière à permettre le déchargement de produits depuis une remorque ou tout autre espace de chargement, vers le volume de stockage **14** du réceptacle **12** au travers de l'ouverture de chargement **24**.

Par déplacement du réceptacle **12** par rapport au châssis **32**, on entend tout aussi bien une unité de traitement **10** dans laquelle la position longitudinale du réceptacle **12** n'est pas modifiée de manière sensible alors que l'essieu **33** est déplacé par rapport au sol, qu'une unité de traitement **10** dans laquelle la position longitudinale de l'essieu **33** n'est pas modifiée de manière sensible, alors que le réceptacle **12** est déplacé selon la direction longitudinale **L**.

Par exemple et de manière non limitative, les moyens de déplacement **36** comprennent différents vérins permettant de déplacer le réceptacle **12** et l'unité de nettoyage **30** par rapport au châssis **32** lorsque le réceptacle **12** passe de l'une à l'autre des première et deuxième positions ; les moyens de déplacement **36** sont agencés par exemple entre le fond **20** du réceptacle **12** et le timon **38**.

Tel que représenté en particulier sur les figures **3** et **4**, les moyens de déplacement **36** sont également configurés pour que, dans la seconde position, la première extrémité longitudinale **16** du réceptacle **12** soit éloignée de l'essieu **33** du châssis **32** par rapport à la première position.

Par exemple et de manière non limitative, dans la première position représentée par la figure **3**, l'essieu **33** s'étend sous le fond **20** du réceptacle **12** à proximité de la première extrémité longitudinale **16**, alors que dans la seconde position, représentée par la figure **4**, l'essieu **33** s'étend sous le fond **20** du réceptacle **12** sensiblement au milieu, considéré selon la direction longitudinale **L**, entre les première et seconde extrémités longitudinales **16**, **18**.

On comprend donc que les moyens de déplacement **36** sont configurés pour que, lorsque le réceptacle **12** passe de l'une à l'autre des première et deuxième positions, le réceptacle **12** soit déplacé à la fois selon un mouvement de coulissement par rapport à l'essieu **33** du châssis **32**, et selon un mouvement de rotation, de manière que sa première extrémité longitudinale **16** soit abaissée dans la seconde position par rapport à la première position.

Par ailleurs, tel que représenté sur les figures **3** et **4**, les moyens de déplacement **36** sont également configurés pour que, dans la deuxième position du réceptacle **12**, l'unité de nettoyage **30** est élevée par rapport à la première position.

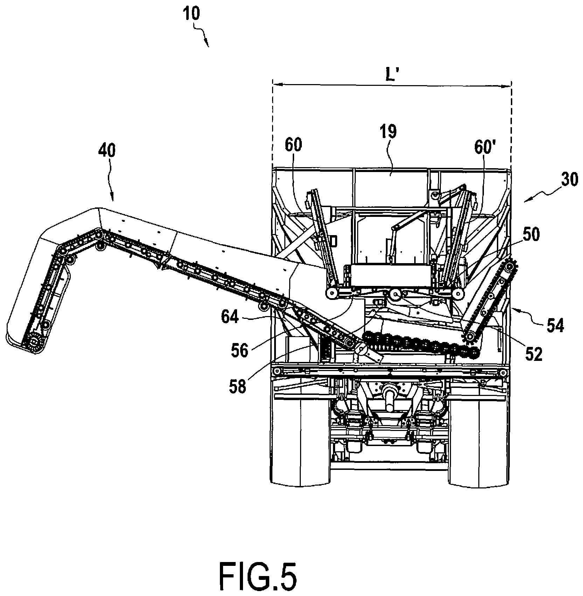

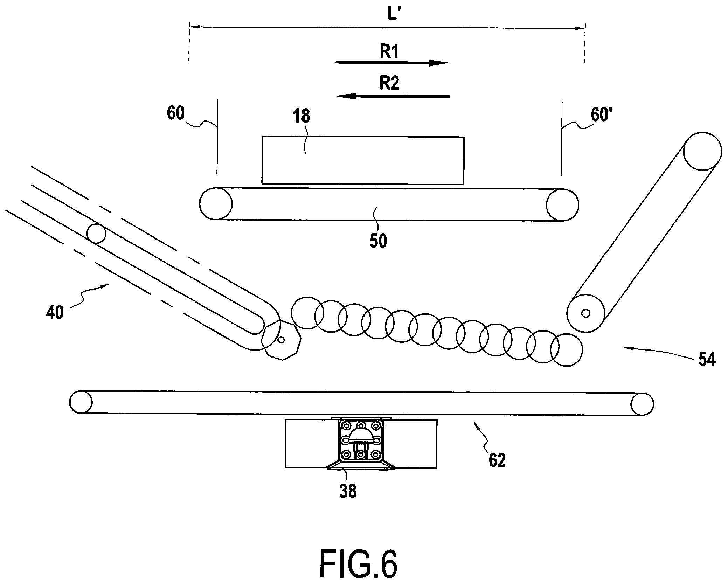

Tel que représenté en particulier sur les figures **5** et **6**, l'unité de nettoyage **30** comporte, par exemple et de manière non limitative, un convoyeur de transfert **50** qui s'étend selon une seconde direction **L**' transversale par rapport à la direction longitudinale **L**, par exemple sensiblement perpendiculaire à la direction longitudinale **L**.

L'unité de traitement **10** comporte en outre des moyens d'actionnement **52** qui sont configurés pour actionner le convoyeur de transfert **50** de manière que sa surface supérieure soit déplacée, alternativement selon un premier sens, symbolisé sur la figure **6** par la flèche **R1**, et selon un second sens, opposé au premier sens, et symbolisé par la flèche **R2**.

L'unité de nettoyage **30** comporte également des moyens de nettoyage **54**, qui s'étendent également sensiblement selon la seconde direction **L**' et qui sont configurés pour nettoyer des produits en les déplaçant ; par exemple et de manière non limitative, les moyens de nettoyage **54** comportent des convoyeurs sur lesquels sont montés des saillies, des doigts crantés ou tout autre dispositif de nettoyage, par exemple de manière pivotante, pour retirer la terre entourant les produits déplacés sur lesdits moyens de nettoyage **54**.

On comprend donc que les produits disposés dans le volume de stockage **14** du réceptacle **12** sont tout d'abord déplacés vers la seconde extrémité longitudinale **18** par le convoyeur **22**.

Les produits sont ensuite déversés sur le convoyeur de transfert **50.**

Dans le mode de fonctionnement dans lequel la surface supérieure du convoyeur de transfert **50** est déplacée selon le premier sens **R1**, les produits sont alors déplacés vers les moyens de nettoyage **54**.

Ils sont ensuite déplacés selon la seconde direction **L**' en étant nettoyés par les moyens de nettoyage **54** vers le dispositif de déchargement **40**, grâce auquel ils sont déchargés, après avoir été nettoyés, hors de l'unité de traitement **10**.

L'unité de traitement **10** comporte en outre un dispositif de contournement **56** qui est configuré pour contourner les moyens de nettoyage **54**, c'est-à-dire qu'il est configuré pour faire passer les produits directement du convoyeur de transfert **50** vers le dispositif de déchargement **40**.

Par exemple et de manière non limitative, les moyens d'actionnement **52** de l'unité de traitement **10** sont également configurés pour actionner le convoyeur de transfert **50** de manière à déplacer sa surface supérieure selon l'un ou l'autre des premier et deuxième sens **R1**, **R2**.

Ainsi, dans le mode de fonctionnement dans lequel la surface supérieure du convoyeur de transfert **50** est déplacée selon le second sens **R2**, les produits qui sont amenés vers le convoyeur de transfert **50** par la seconde extrémité longitudinale **18** du réceptacle **12**, sont alors déplacés directement vers le dispositif de déchargement **40**, sans qu'ils soient déplacés et nettoyés par les moyens de nettoyage **54**.

Par exemple et de manière non limitative, l'unité de traitement **10** comporte également des première et seconde trappes **60**, **60**' qui sont configurées pour contraindre les produits lorsqu'ils sont disposés sur le convoyeur de transfert **50**. Les première et seconde trappes **60**, **60**', telles que représentées sur la figure **6**, s'étendent de manière sensiblement verticale au-dessus de la surface supérieure du convoyeur de transfert **50**, de part et d'autre de l'ouverture par laquelle les produits disposés à la seconde extrémité longitudinale **18** du réceptacle **12**, sont déversés sur le convoyeur de transfert **50**.

Les trappes **60**, **60**' sont ainsi configurées pour alternativement être pivotées pour permettre le passage de produits, ou pour être bloquées de manière à empêcher le passage des produits ; en outre, par exemple et de manière non limitative, les moyens d'actionnement **52** sont configurés pour coopérer avec les trappes **60**, **60**' de manière qu'elles prennent alternativement l'une des positions de blocage ou de passage en fonction du sens dans lequel la surface supérieure du convoyeur de transfert **50** est déplacée.

On comprend que lesdites trappes **60**, **60**' sont configurées pour empêcher, respectivement, les produits d'aller directement sur le dispositif de déchargement **40**, lorsque les moyens d'actionnement **52** sont actionnés pour déplacer la surface supérieure du convoyeur de transfert selon le premier sens **R1**, et d'aller vers les moyens de nettoyage **54** lorsque les moyens d'actionnement **58** sont actionnés pour déplacer la surface supérieure du convoyeur de transfert selon le second sens **R2**.

L'unité de traitement **10** comporte en outre un dispositif d'évacuation **62** configuré pour évacuer la terre qui est retirée des produits par les moyens de nettoyage **54**.

Par ailleurs, l'unité de traitement **10** comporte des moyens de rangement **64** qui sont configurés pour déplacer le dispositif de déchargement **40**, de manière qu'il puisse prendre, alternativement, une position d'usage dans laquelle il s'étend à partir des moyens de nettoyage **54**, tel que représenté en particulier sur les figures **5** et **6**, et une position de rangement, dans laquelle il est rabattu contre l'unité de nettoyage **30**, tel que représenté en particulier sur la figure **1**.

La description ci-dessus est donnée à titre d'exemple, et n'est donc pas limitative de l'invention.

## Revendications

1. Unité de traitement de produits agricoles (10) ayant une direction longitudinale (L) et comprenant :
- un réceptacle (12) ayant un volume de stockage (14) et comportant des première et seconde extrémités longitudinales (16, 18), une ouverture de chargement (24) formée à la première extrémité longitudinale qui débouche dans le volume de stockage, et un convoyeur (22) configuré pour déplacer lesdits produits de la première à la seconde extrémité longitudinale ;
- une unité de nettoyage (30) disposée à la seconde extrémité longitudinale du réceptacle et configurée pour nettoyer les produits ;
- un châssis (32) supportant le réceptacle et l'unité de nettoyage et comportant un essieu (33), et des moyens de déplacement (36) configurés pour que le réceptacle prenne alternativement :
∘ une première position ; et
∘ une seconde position dans laquelle le réceptacle est déplacé par rapport au châssis de manière que la première extrémité longitudinale est abaissée par rapport à la première position, en sorte de permettre le chargement de produits dans le volume de stockage par l'ouverture de chargement.

2. Unité de traitement (10) selon la revendication **1**, dans laquelle les moyens de déplacement sont configurés de manière que, dans la seconde position, la première extrémité longitudinale est éloignée de l'essieu du châssis par rapport à la première position.

3. Unité de traitement (10) selon la revendication **1** ou **2**, dans laquelle le réceptacle comprend un fond (20) et le châssis comporte un timon (38), les moyens de déplacement étant agencés entre le fond du réceptacle et le timon.

4. Unité de traitement (10) selon l'une quelconque des revendications **1 à 3**, les moyens de déplacement étant configurés de manière que le réceptacle coulisse par rapport à l'essieu lorsqu'il passe de l'une à l'autre des première et deuxième positions.

5. Unité de traitement (10) selon l'une quelconque des revendications **1 à 4**, dans laquelle les moyens de déplacement sont configurés de manière que, dans la deuxième position, l'unité de nettoyage est élevée par rapport à la première position.

6. Unité de traitement (10) selon l'une quelconque des revendications **1 à 5**, dans laquelle l'unité de nettoyage est configurée pour déplacer les produits selon une seconde direction (L') transversale par rapport à la direction longitudinale.

7. Unité de traitement (10) selon l'une quelconque des revendications **1 à 6**, dans laquelle l'unité de nettoyage comporte un convoyeur de transfert (50) disposé à la seconde extrémité longitudinale du réceptacle et des moyens de nettoyage (54), le convoyeur de transfert étant configuré pour déplacer les produits du réceptacle vers les moyens de nettoyage.

8. Unité de traitement (10) selon la revendication **7**, qui comporte en outre un dispositif de déchargement (40) configuré pour décharger les produits hors de l'unité de traitement, les moyens de nettoyage étant configurés pour nettoyer les produits et les déplacer du convoyeur de transfert vers le dispositif de déchargement.

9. Unité de traitement (10) selon la revendication **8**, qui comporte en outre un dispositif de contournement (56) configuré pour contourner les moyens de nettoyage, de manière à déplacer les produits directement du réceptacle vers le dispositif de déchargement.

10. Unité de traitement (10) selon la revendication **9**, qui comporte en outre des moyens d'actionnement (52) configurés pour actionner le convoyeur de transfert alternativement :
- selon un premier sens (R1), de manière à déplacer les produits du réceptacle vers les moyens de nettoyage, et
- selon un second sens (R2), opposé au premier sens, de manière à déplacer les produits directement du réceptacle vers le dispositif de déchargement.

11. Unité de traitement (10) selon l'une quelconque des revendications **8 à 10**, qui comporte en outre des moyens de rangement (64) configurés pour que le dispositif de déchargement prenne alternativement :
- une position d'usage dans laquelle il s'étend à partir des moyens de nettoyage ; et
- une position de rangement dans laquelle il est rabattu contre l'unité de nettoyage.

## Patentansprüche

1. Behandlungseinheit (10) für landwirtschaftliche Produkte, die eine Längsrichtung (L) aufweist und die umfasst:
- einen Behälter (12), der ein Aufbewahrungsvolumen (14) aufweist und ein erstes und zweites Längsende (16, 18), eine Ladeöffnung (24), die an dem ersten Längsende gebildet wird und die in das Aufbewahrungsvolumen mündet, und ein Förderband (22) umfasst, das ausgestaltet ist, um die Produkte von dem ersten zu dem zweiten Längsende zu bewegen,
- eine Reinigungseinheit (30), die an dem zweiten Längsende des Behälters angeordnet und ausgestaltet ist, um die Produkte zu reinigen,
- ein Fahrwerk (32), das den Behälter und die Reinigungseinheit stützt und eine Achse (33) umfasst, und Bewegungsmittel (36), die ausgestaltet sind, damit der Behälter abwechselnd einnimmt:
∘ eine erste Position und
∘ eine zweite Position, in welcher der Behälter in Bezug auf das Fahrwerk verschoben ist, damit das erste Längsende in Bezug auf die erste Position gesenkt ist, um das Laden der Produkte durch die Ladeöffnung in das Aufbewahrungsvolumen zu ermöglichen.

2. Behandlungseinheit (10) nach Anspruch 1, wobei die Bewegungsmittel ausgestaltet sind, damit das erste Längsende in der zweiten Position in Bezug auf die erste Position von der Achse des Fahrwerks entfernt ist.

3. Behandlungseinheit (10) nach Anspruch 1 oder 2, wobei der Behälter einen Boden (20) umfasst und das Fahrwerk eine Deichsel (38) umfasst, wobei die Bewegungsmittel zwischen dem Boden des Behälters und der Deichsel angeordnet sind.

4. Behandlungseinheit (10) nach einem der Ansprüche 1 bis 3, wobei die Bewegungsmittel ausgestaltet sind, damit der Behälter in Bezug auf die Achse gleitet, wenn er von der einen der ersten und zweiten Position in die andere wechselt.

5. Behandlungseinheit (10) nach einem der Ansprüche 1 bis 4, wobei die Bewegungsmittel ausgestaltet sind, damit die Reinigungseinheit in der zweiten Position in Bezug auf die erste Position erhöht ist.

6. Behandlungseinheit (10) nach einem der Ansprüche 1 bis 5, wobei die Reinigungseinheit ausgestaltet ist, um die Produkte in Bezug auf die Längsrichtung gemäß einer zweiten Querrichtung (L') zu bewegen.

7. Behandlungseinheit (10) nach einem der Ansprüche 1 bis 6, wobei die Reinigungseinheit einen Förderer (50), der an dem zweiten Längsende des Behälters angeordnet ist, und Reinigungsmittel (54) umfasst, wobei der Förderer ausgestaltet ist, um die Produkte von dem Behälter zu den Reinigungsmitteln zu bewegen.

8. Behandlungseinheit (10) nach Anspruch 7, die ferner eine Entladevorrichtung (40) umfasst, die ausgestaltet ist, um die Produkte außerhalb der Behandlungseinheit zu entladen, wobei die Reinigungsmittel ausgestaltet sind, um die Produkte zu reinigen und sie von dem Förderer zu der Entladevorrichtung zu bewegen.

9. Behandlungseinheit (10) nach Anspruch 8, die ferner eine Umgehungsvorrichtung (56) umfasst, die ausgestaltet ist, um die Reinigungsmittel zu umgehen, um die Produkte direkt von dem Behälter zu der Entladevorrichtung zu bewegen.

10. Behandlungseinheit (10) nach Anspruch 9, die ferner Betätigungsmittel (52) umfasst, die ausgestaltet sind, um den Förderer abwechselnd zu betätigen:
- gemäß einer ersten Richtung (R1), um die Produkte von dem Behälter zu den Reinigungsmitteln zu bewegen, und
- gemäß einer zweiten Richtung (R2), die der ersten Richtung entgegengesetzt ist, um die Produkte direkt von dem Behälter zu der Entladevorrichtung zu bewegen.

11. Behandlungseinheit (10) nach einem der Ansprüche 8 bis 10, die ferner Ablagemittel (64) umfasst, die ausgestaltet sind, damit die Entladevorrichtung abwechselnd einnimmt:
- eine Verwendungsposition, in der sie sich von den Reinigungsmitteln ausgehend erstreckt, und
- eine Ablageposition, in der sie gegen die Reinigungseinheit geklappt ist.

## Claims

1. A unit (10) for processing agricultural products, having a longitudinal direction (L) and comprising:
- a receptacle (12) having a storage volume (14) and including first and second longitudinal ends (16, 18), a loading opening (24) formed at the first longitudinal end that opens into the storage volume, and a conveyor (22) configured to move said products from the first to the second longitudinal end;
- a cleaning unit (30) disposed at the second longitudinal end of the receptacle and configured to clean the products;
- a chassis (32) supporting the receptacle and the cleaning unit and including an axle (33), and displacement means (36) configured so that the receptacle takes alternately:
o a first position; and
o a second position in which the receptacle is moved relative to the chassis so that the first longitudinal end is lowered relative to the first position, so as to allow the loading of products into the storage volume by the loading opening.

2. The processing unit (10) according to claim 1, wherein the displacement means are configured so that, in the second position, the first longitudinal end is moved away from the axle of the chassis relative to the first position.

3. The processing unit (10) according to claim 1 or 2, wherein the receptacle comprises a bottom (20) and the chassis includes a drawbar (38), the displacement means being arranged between the bottom of the receptacle and the drawbar.

4. The processing unit (10) according to any one of claims 1 to 3, the displacement means being configured so that the receptacle slides relative to the axle when it switches from one to the other of the first and second positions.

5. The processing unit (10) according to any one of claims 1 to 4, wherein the displacement means are configured so that, in the second position, the cleaning unit is raised relative to the first position.

6. The processing unit (10) according to any one of claims 1 to 5, wherein the cleaning unit is configured to move the products in a second direction (L') transverse relative to the longitudinal direction.

7. The processing unit (10) according to any one of claims 1 to 6, wherein the cleaning unit includes a transfer conveyor (50) disposed at the second longitudinal end of the receptacle and cleaning means (54), the transfer conveyor being configured to move the products of the receptacle towards the cleaning means.

8. The processing unit (10) according to claim 7, which further includes an unloading device (40) configured to unload the products out of the processing unit, the cleaning means being configured to clean the products and move them from the transfer conveyor to the unloading device.

9. The processing unit (10) according to claim 8, which further includes a bypass device (56) configured to bypass the cleaning means, so as to move the products directly from the receptacle to the unloading device.

10. The processing unit (10) according to claim 9, which further includes actuating means (52) configured to actuate the transfer conveyor alternatively:
- in a first way (R1), so as to move the products from the receptacle to the cleaning means, and
- in a second way (R2), opposite the first way, so as to move the products directly from the receptacle to the unloading device.

11. The processing unit (10) according to any one of claims 8 to 10, which further includes storing means (64) configured so that the unloading device takes alternatively:
- a position of use in which it extends from the cleaning means; and
- a storing position in which it is folded back against the cleaning unit.
